# EUROPÄISCHE PATENTSCHRIFT

(11) **EP 1 000 810 B1**
(45) Veröffentlichungstag und Bekanntmachung des Hinweises auf die Patenterteilung: **25.01.2006**
(21) Anmeldenummer: 99121133.5
(22) Anmeldetag: 22.10.1999
(51) Int. Cl.: B60R 16/02, B60K 35/00, G06F 15/00

(54) **Rechnersystem für ein Kraftfahrzeug**
Vehicle computer system
Système d'ordinateur pour véhicule

(30) Priorität: 09.11.1998 DE 19851438
(43) Veröffentlichungstag der Anmeldung: 17.05.2000
(73) Patentinhaber: Volkswagen Aktiengesellschaft, 38436 Wolfsburg (DE)
(72) Erfinder: Oberschachtsiek, André, Dipl.-Ing., 38518 Gifhorn (DE)

(56) Entgegenhaltungen:
- EP-A- 0 965 491
- WO-A-99/48021
- DE-A- 4 110 372
- DE-A- 4 115 662
- DE-A- 4 244 468
- US-A- 4 881 227
- US-A- 5 369 584

## Beschreibung

Die Erfindung betrifft ein Rechnersystem für ein Kraftfahrzeug. In modernen Fahrzeugen werden derartige Systeme eingesetzt, um die einzelnen Funktionen der peripheren Einrichtungen eines Fahrzeugs, wie Beleuchtung, (Mit)Fahrerinformation und - kommunikation bzw. Entertainmentsysteme, Heizungseinrichtungen, Klimaanlage, Radio, Telekommunikationseinrichtungen, zu steuern. Der Vorteil der Verwendung eines Rechnersystems zu diesem Zweck besteht darin, daß sowohl die Signalübertragung an die jeweiligen Einrichtungen als auch die Bedienung durch den Fahrzeugführer vereinfacht werden kann.

Aus dem Dokument US 5,369,584 ist ein Rechnersystem für ein Kraftfahrzeug bekannt, mit einer Rechnereinheit, welche in Abhängigkeit von Steuerbefehlen des Kraftfahrzeugführers die Funktionen fahrzeugspezifischer Einrichtungen, wie Radio oder Navigation steuert, und weiteren Recheneinheiten die Klimaanlage, Motor, Abtrieb etc. steuern mit einer gemeinsamen Bedieneinheit zum Eingeben von Information und mit einer gemeinsamen Ausgabeeinheit zum Ausgeben von Information, wobei die Bedieneinheit die jeweils eingegebene Information mit einer Vorgabe an die Rechnereinheiten übergibt und wobei die Anzeigeneinheit die jeweils auszugebende, von den Rechnereinheiten erzeugte Information anzeigt.

Das Dokument EP 965491 stellt einen Stand der Technik nach Art. 54(3) EPÜ dar und offenbart eine Fernsteuerung für z.B. eine Klimaanlage eines Fahrzeugs mittels eines Mobiltelefons, wobei die Eingabe und die Rückmeldungen der Fernsteuerbefehle auf der Bedien- und Anzeigeeinheit des Mobiltelefons geschieht.

Ein Rechnersystem, bei dem zwei Rechnereinheiten für die Steuerung der für eine Brennkraftmaschine eines Kraftfahrzeugs bestimmten Gemischzusammensetzung eingesetzt werden, ist beispielsweise aus der DE 37 00 986 C2 bekannt. Bei diesem Rechnersystem überwachen die beiden Rechnereinheiten einander gegenseitig. Zu diesem Zweck werden nach Art eines Hand-Shake-Betriebs die von beiden Rechnereinheiten bearbeiteten Daten zyklisch ausgetauscht. Zusätzlich können die beiden Rechnereinheiten die jeweils andere Einheit neu starten. Ebenso ist es vorgesehen, daß die Rechnereinheiten völlig unabhängig voneinander arbeiten.

Bei einer in der DE 41 12 334 A1 beschriebenen Weiterentwicklung des in DE 37 00 986 erläuterten Rechnersystems ist jede Rechnereinheit mit einer Einrichtung ausgestattet, welche unterscheiden kann, ob es sich nach dem Start einer anderen Rechnereinheit um einen Neustart (nach vorhergehendem Betrieb) oder um eine Inbetriebnahme (nach vorhergehendem vollständigem Stillstand) handelt. Um diese Erkennung durchzuführen, tauschen die einzelnen Rechnereinheiten des Systems in Abhängigkeit vom jeweiligen Betriebszustand gebildete Kennungen aus. Die Unterscheidung zwischen Neustart und Inbetriebnahme durch eine der Rechnereinheiten erfolgt dadurch, daß die betreffende Rechnereinheit die empfangenen Kennungen mit der eigenen Kennung vergleicht.

Im Zuge der zunehmenden Bedeutung von Geräten für die Verarbeitung von Daten, beispielsweise im Zusammenhang mit der Bewältigung logistischer Aufgabenstellungen, der Telekommunikation oder der Ausnutzung der Fahrzeit für die Bearbeitung von Texten, ist die Anforderung gestellt worden, auch Kraftfahrzeuge mit derartigen Geräten auszustatten.

Erfindungsgemäß wird diese Anforderung durch ein Rechnersystem erfüllt, das mit einer ersten Rechnereinheit, welche in Abhängigkeit von Steuerbefehlen des Kraftfahrzeugführers die Funktionen fahrzeugspezifischer Einrichtungen, wie Beleuchtung, (Mit)Fahrerinformation und -kommunikation bzw. Entertainmentsysteme, Scheibenwischer, Heizungseinrichtungen, Klimaanlage, Radio, Telekommunikationseinrichtungen, steuert, mit mindestens einer zweiten Rechnereinheit, welche vom Kraftfahrzeugführer vorgegebene Programme, wie Textverarbeitungsprogramme, Spielprogramme, ausführt, mit einer gemeinsamen Bedieneinheit zum Eingeben von Information und mit einer gemeinsamen Ausgabeeinheit zum Ausgeben von Information ausgestattet ist, wobei die Bedieneinheit die jeweils eingegebene Information in Abhängigkeit von einer Vorgabe an die erste oder zweite Rechnereinheit übergibt und wobei die Anzeigeneinheit die jeweils auszugebende, von der ersten oder zweiten Rechnereinheit erzeugte Information anzeigt.

Bei einem erfindungsgemäß ausgebildeten Rechnersystem für Kraftfahrzeuge sind mindestens zwei selbständige Rechnereinheiten vorhanden, von denen die eine die speziellen, direkt auf die Funktionen des Fahrzeugs bezogenen Steuervorgänge auslöst und durchführt, während die andere für die besonderen Anforderungen des Fahzeugnutzers zur Verfügung steht. Dies hat den Vorteil, daß die Informationen, welche in der einen Rechnereinheit verarbeitet werden, keinen Einfluß haben auf die Verarbeitungsvorgänge der anderen Einheit, und umgekehrt. Ein Eingriff des Fahrzeugführers in die der Steuerung des Fahrzeugs zugrunde liegende Programmierung ist so sicher verhindert. Auf diese Weise werden Probleme sicher vermieden, wie sie trotz geeigneter Vorsichtsmaßnahmen bei solchen Systemen auftreten, bei denen mit einer einzigen Rechnereinheit Programme verarbeitet werden, weiche zum Teil dem Benutzer des Fahrzeugs und zum anderen Teil dem Fahrzeug selbst zugeordnet sind.

Ein weiterer Vorteil der erfindungsgemäßen Ausbildung eines Rechnersystems besteht darin, daß die Eingabe- und Ausgabeinformation über jeweils von den Rechnereinheiten des Systems gemeinsam genutzten Bedien- und Ausgabeeinheiten ein- bzw. ausgegeben werden. Auf diese Weise kann nicht nur der apparative Aufwand und der Raumbedarf für diese beiden Einrichtungen minimiert werden, sondern es ist auf einfache Weise die Möglichkeit geschaffen, die vom Benutzer vorgegebenen Informationen an zentraler Stelle zu kontrollieren und in geeigneter Weise weiterzuverarbeiten. Darüber hinaus kann auf diese Weise die gemeinsame Nutzung von Daten, die innerhalb des Systems für beide Rechner zur Verfügung stehen, durchgeführt werden, ohne daß es dazu einer besonderen Auswahl durch den Benutzer bedarf.

Bei der Vorgabe, anhand derer die Zuordnung der eingegebenen Information zu der jeweils angesprochenen Rechnereinheit erfolgt, kann es sich beispielsweise um ein Signal handeln, welches der Nutzer durch Drücken einer bestimmten Taste der Bedieneinheit auslöst. Genauso ist es aber auch möglich, die Bedieneinheit selbst den Vorgabewert ermitteln zu lassen, indem diese die eingegebene Information auswertet und anhand des Ergebnisses der Auswertung die Vorgabe festlegt.

Eine besonders vorteilhafte Ausgestaltung der Erfindung ist dadurch gekennzeichnet, daß die Bedieneinheit mit der ersten Rechnereinheit verbunden ist und daß die erste Rechnereinheit die eingegebene Information in Abhängigkeit von der Vorgabe an die zweite Rechnereinheit weitergibt. Ebenso günstig ist es, wenn die Anzeigeeinheit mit der ersten Rechnereinheit verbunden ist und wenn die erste Rechnereinheit die anzuzeigende Information der zweiten Rechnereinheit an die Anzeigeeinheit weitergibt. Dies kann beispielsweise dann erfolgen, wenn ein bestimmtes Anforderungssignal der zweiten Rechnereinheit vorliegt. Indem die für die zweite Rechnereinheit bestimmten Informationen über die erste Rechnereinheit weitergegeben werden, ist es auf einfache Weise möglich, eine Aufbereitung und Überprüfung der eingegebenen bzw. anzuzeigenden Information durch die erste Rechnereinheit durchzuführen. Auf diese Weise kann nicht nur der apparative Aufwand für die Bedien- und Anzeigeeinheit weiter vermindert werden, sondern es ist zudem sichergestellt, daß die Überprüfung und Aufbereitung selbst nicht vom Nutzer des Rechnersystems beeinflußt oder durch Fehler der zweiten Rechnereinheit gestört wird.

Eine weitere praxisgerechte Ausgestaltung der Erfindung ist dadurch gekennzeichnet, daß jede der Rechnereinheiten über eine ausies- und beschreibbare Speichereinheit verfügt und daß ein Schreib- und Lesezugriff der ersten Rechnereinheit auf die Speichereinheit der zweiten Rechnereinheit ermöglicht ist. Auf diese Weise kann der zur Verfügung stehende Speicherplatz optimal genutzt werden. So kann die erste Rechnereinheit, welche während des Betriebs des Fahrzeugs stets arbeitet, dann, wenn die zweite Rechnereinheit vom Benutzer des Fahrzeugs nicht genutzt wird, auf deren Speicherplatz zurückgreifen, so daß die Verarbeitungsgeschwindigkeit und die Sicherheit der Datenverarbeitung erhöht ist. Ein Schreibzugriff der zweiten Rechnereinheit auf die Speichereinheit der ersten Rechnereinheit sollte, wenn überhaupt, nur dann möglich sein, wenn die erste Rechnereinheit ihn zuläßt. Die gezielte Kontrolle oder der Ausschluß eines Schreibzugriffs durch die zweite Rechnereinheit auf die gespeicherten Daten der ersten Rechnereinheit stellt sicher, daß Fehler der zweiten Rechnereinheit keinen Einfluß auf die Arbeitsfähigkeit der für den Betrieb des Fahrzeugs wesentlichen ersten Rechnereinheit hat.

Günstig ist es auch, wenn, ähnlich wie beim eingangs erläuterten Stand der Technik, die erste Rechnereinheit die Funktion der zweiten Rechnereinheit überwacht und im Falle eines Fehlers der zweiten Rechnereinheit ein Signal abgibt. Dabei ist es ebenso möglich, daß die Rechnereinheiten einander gegenseitig überwachen und im Fall eines Fehlers der jeweils anderen Rechnereinheit ein Signal abgeben. Praktischer Weise sollte diejenige Rechnereinheit, welche einen Fehler der jeweils anderen Rechnereinheit feststellt, dem eine bestimmte Fehlerklasse zugeordnet ist, ein Rücksetz- oder Neustart-Signal an die fehlerhafte Rechnereinheit senden.

Um den Anschluß externer Geräte, wie Telekommunikationsgeräte, an die zweite Rechnereinheit auf einfache Weise zu ermöglichen, sollte die zweite Rechnereinheit mit mindestens einer standardisierten Schnittstelle zum Übermitteln von Daten an ein externes Gerät ausgestattet sein.

Die Betriebssicherheit eines erfindungsgemäßen Rechnersystems kann zusätzlich dadurch gesteigert werden, daß die an die erste oder die zweite Rechnereinheit gesendete Information eine Überwachungseinrichtung durchläuft, welche die Information überprüft und nur solche Information zu der jeweiligen Rechnereinheit passieren läßt, deren Zulässigkeit sie festgestellt hat.

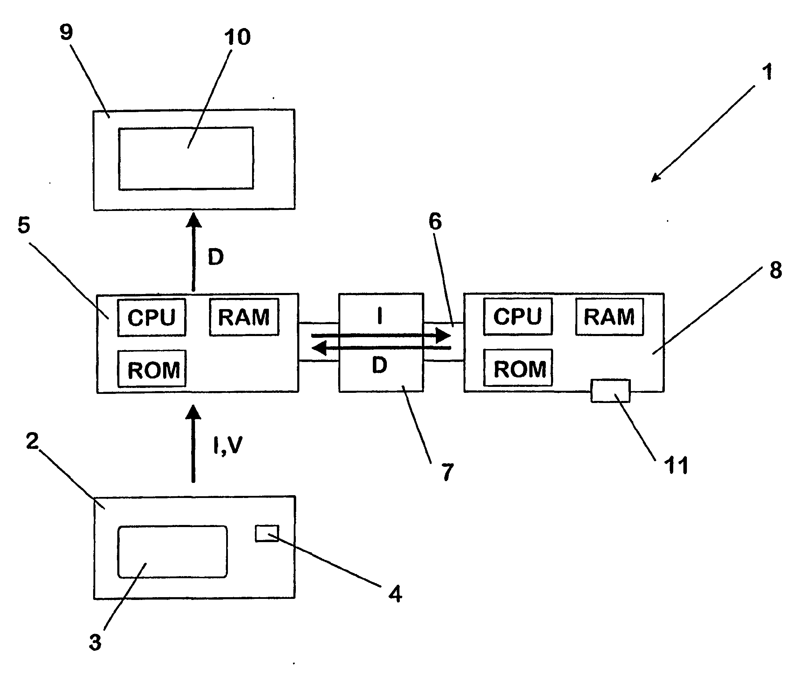

Nachfolgend wird die Erfindung anhand einer ein Ausführungsbeispiel darstellenden Zeichnung näher erläutert. Die einzige Figur zeigt schematisch den Aufbau eines Rechnersystems für ein Kraftfahrzeug.

Das Rechnersystem 1 umfaßt eine Bedieneinheit 2, die ein alphanumerisches Eingabefeld 3 aufweisen kann, über welche ein Benutzer des Kraftfahrzeugs eine Information I eingeben kann. Alternativ oder zusätzlich kann die Bedieneinheit 2 auch mit einer hier nicht dargestellten Spracherkennungseinrichtung ausgestattet sein, welche vom Fahrer gesprochene Worte in datentechnisch verarbeitbare Information I umwandelt.

Zusätzlich weist die Bedieneinheit 2 mindestens eine Taste 4 auf. Durch Betätigen der Taste 4 kann eine Vorgabe V mit einem bestimmten Wert besetzt werden, welcher signalisiert, um welche Art von Information es sich bei der eingegebenen Information I handelt bzw. an welche der Rechnereinheiten 5,8 die Information I gerichtet ist. Alternativ oder zusätzlich ist die Bedieneinheit 2 mit einer nicht dargestellten Auswerteinrichtung ausgestattet, welche die eingegebene Information I auswertet und anhand des Ergebnisses der Auswertung den Vorgabewert V setzt.

Darüber hinaus ist die Bedieneinheit 2 mit nicht dargestellten Schaltern oder Tastern verbunden, über die bestimmte Funktionen des Kraftfahrzeugs ein- und ausgeschaltet werden können. Die in sie eingegebenen Schaltsignale dieser Schalter bzw. Taster werden von der Bedieneinheit 2 als digitale Information I aufbereitet und weitergeleitet, wobei zusätzlich die Vorgabe V entsprechend des Ziels der jeweiligen Information I mit dem jeweils zutreffenden Wert besetzt wird.

Die Bedieneinheit 2 liefert die Information I und die Vorgabe V an eine erste Rechnereinheit 5. Die Rechnereinheit 5 ist über einen Datenbus 6, der eine Überprüfungseinrichtung 7 durchläuft, mit einer zweiten Rechnereinheit 8 verkoppelt. Zusätzlich ist an die Rechnereinheit 5 eine Anzeigeeinrichtung 9 angeschlossen, die mit einen Display 10 und ggf. ergänzend mit einer nicht dargestellten Sprachausgabeeinrichtung ausgestattet ist.

Jede der Rechnereinheiten 5,8 ist mit einem Prozessor CPU, einem les- und beschreibbaren Arbeitsspeicher RAM und einem nur lesbaren Festspeicher ROM ausgestattet. In dem Festspeicher ROM sind festprogrammierte Programmdaten gespeichert, welche es ermöglichen, die jeweilige Rechnereinheit 5,8 nach vollständiger Abschaltung in Betrieb zu nehmen oder nach einer Störung neu zu starten und in einen Ausgangszustand zu versetzen.

Über den Datenbus 6 kann die erste Rechnereinheit 5 Lese- und Schreiboperationen im Arbeitsspeicher RAM der zweiten Rechnereinheit 8 in Abhängigkeit von dessen Auslastung durchführen, während ein Zugriff der zweiten Rechnereinheit 8 auf den Arbeitsspeicher RAM der ersten Rechnereinheit 5 verhindert ist. Auf diese Weise steht eine vergrößerte Menge Arbeitsspeicher RAM für die erste Rechnereinheit 5 zur Verfügung.

Die zweite Rechnereinheit 8 ist zusätzlich mit Standardschnittstellen 11, wie einer PCMCIA-, einer USB-, RS 323- und/oder einer V24-Schnittstelle, ausgestattet, welche es ermöglichen, nicht gezeigte externe Geräte, welche über eine entsprechende Schnittstelle verfügen, an die zweite Rechnereinheit anzuschließen und/oder die Rechnereinheit 8 zu beeinflussen.

Die erste Rechnereinheit 5 ist für die Steuerung von Funktionen des Kraftfahrzeugs zuständig. So werden über die erste Rechnereinheit 5 beispielsweise die Klimaanlage, die Telekommunikationsgeräte, die Musikanlage, die Heizung, die Beleuchtung, die Scheibenwischer etc. des Fahrzeugs verwaltet, überwacht und gesteuert. Dazu laufen auf der Rechnereinheit ggf. im Multitasking-Betrieb vom Hersteller des Fahrzeugs speziell auf den jeweiligen Fahrzeugtyp abgestimmte Programme, deren Programmierung durch den Fahrzeugnutzer nicht verändert werden kann.

Auf der zweiten Rechnereinheit 8 laufen demgegenüber Programme, welche durch den Fahrzeugnutzer vorgegeben werden können. Bei diesen Programmen kann es sich beispielsweise um handelsübliche Textverarbeitungs- oder Telekommunikationsprogramme, benutzerspezifische Programme zur logistischen Verwaltung des Fahrzeugs usw. handeln.

Die erste Rechnereinheit 5 wertet zunächst den Wert der Vorgabe V aus. Stellt sie dabei fest, daß die übermittelte Information I für sie selbst bestimmt ist, führt sie denjenigen Steuervorgang aus, dem die Information I zugeordnet ist. Mit dem Steuervorgang einhergehende Veränderungen, welche wichtig für den Fahrzeugführer sind, werden auf dem Display 10 der Anzeigeeinheit 9 dargestellt oder über die Sprachausgabeeinrichtung der Anzeigeeinheit 9 wiedergegeben.

Stellt demgegenüber die erste Rechnereinheit 5 aufgrund eines entsprechenden Werts der Vorgabe V fest, daß die jeweilige Information I für die zweite Rechnereinheit 8 bestimmt ist, leitet sie die Information I über den Datenbus 6 an die zweite Rechnereinheit 8 weiter. Dabei passiert die Information I die Überprüfungseinrichtung 7, in welcher ihre Zuverlässigkeit und Zulässigkeit geprüft wird.

Von der zweiten Rechnereinheit 8 erzeugte Information D wird wiederum über den Datenbus 6 an die erste Rechnereinheit 5 übergeben. Dabei wird diese Information D ebenfalls von der Überprüfungseinrichtung 7 überprüft. Durch diese Überprüfung der zwischen der ersten und zweiten Rechnereinheit 5,8 ausgetauschten Daten ist das Risiko einer Störung durch fehlerhafte Information I, D minimiert. Darüber hinaus ist sichergestellt, daß kein Zugriff auf die erste Rechnereinheit 5 stattfindet, durch die deren Funktion gezielt beeinflußt wird.

Die erste Rechnereinheit 5 liefert die von der zweiten Rechnereinheit 8 erzeugte Information D an die Anzeigeeinrichtung 9, auf deren Display 10 sie dargestellt wird.

Während des Betriebs überwacht die erste Rechnereinheit 5 die Funktion der zweiten Rechnereinheit 8. Stellt sie dabei einen Fehler fest, welcher einer bestimmten, den Neustart oder das Zurücksetzen der Rechnereinheit 8 erforderlich machenden Fehlerklasse zugeordnet ist, so gibt sie ein über den Datenbus 6 übertragenes Rücksetz- und/oder Neustart-Signal R an die zweite Rechnereinheit 8 ab. Diese wird daraufhin zurückgesetzt oder startet von neuem und durchläuft das in ihrem Festspeicher ROM gespeicherte Initialisierungsprogramm.

### BEZUGSZEICHENLISTE

- 1: Rechnersystem
- 2: Bedieneinheit
- 3: alphanumerisches Eingabefeld
- 4: Taste
- 5: erste Rechnereinheit
- 6: Datenbus
- 7: Überprüfungseinrichtung
- 8: zweite Rechnereinheit
- 9: Anzeigeeinrichtung
- 10: Display
- 11: Standardschnittstellen

- CPU: Prozessor
- D: von der zweiten Rechnereinheit 8 erzeugte Information
- I: eingegebene Information
- R: Rücksetz- und/oder Neustart-Signal
- RAM: les- und beschreibbarer Arbeitsspeicher
- ROM: nur lesbarer Festspeicher
- V: Vorgabe

## Patentansprüche

1. Rechnersystem für ein Kraftfahrzeug
- mit einer ersten Rechnereinheit (5), welche in Abhängigkeit von Steuerbefehlen des Kraftfahrzeugführers die Funktionen fahrzeugspezifischer Einrichtungen, wie Beleuchtung, Scheibenwischer, Heizungseinrichtungen, Klimaanlage, Radio, Informationssysteme, Kommunikationssysteme, Telekommunikationseinrichtungen, steuert,
- mit mindestens einer zweiten Rechnereinheit (8), welche vom Kraftfahrzeugführer vorgegebene Programme, wie Textverarbeitungsprogramme, Spielprogramme, ausführt,
- mit einer gemeinsamen Bedieneinheit (2) zum Eingeben von Information (I) und
- mit einer gemeinsamen Ausgabeeinheit (9) zum Ausgeben von Information (D),
- wobei die Bedieneinheit (2) die jeweils eingegebene Information (I) mit einer Vorgabe (V) an die erste oder zweite Rechnereinheit (5, 8) übergibt und
- wobei die Anzeigeneinheit (9) die jeweils auszugebende, von der ersten oder zweiten Rechnereinheit (5, 8) erzeugte Information (D) anzeigt, wobei
- jede der Rechnereinheiten (5, 8) über eine ausles-und beschreibbare Speichereinheit (RAM) verfügt und ein Schreib- und Lesezugriff der ersten Rechnereinheit (5) auf die Speichereinheit (RAM) der zweiten Rechnereinheit (8) ermöglicht ist und wobei ein Schreibzugriff der zweiten Rechnereinheit (8) auf die Speichereinheit (RAM) der ersten Rechnereinheit (5) nur dann möglich ist, wenn die erste Rechnereinheit (5) ihn zuläßt.

2. Rechnersystem nach Anspruch 1, **dadurch gekennzeichnet, daß** die Bedieneinheit (2) mit der ersten Rechnereinheit (5) verbunden ist und daß die erste Rechnereinheit (5) die eingegebene Information (I) in Abhängigkeit von der Vorgabe (V) an die zweite Rechnereinheit (8) weitergibt.

3. Rechnersystem nach einem der voranstehenden Ansprüche, **dadurch gekennzeichnet, daß** die Anzeigeeinheit (9) mit der ersten Rechnereinheit (5) verbunden ist und daß die erste Rechnereinheit (5) die anzuzeigende Information (D) der zweiten Rechnereinheit (8) an die Anzeigeeinheit (9) weitergibt.

4. Rechnersystem nach einem der voranstehenden Ansprüche, **dadurch gekennzeichnet, daß** die Bedieneinheit (2) die Vorgabe (5) für das Weitergeben der eingegebenen Information (I) an die erste oder zweite Rechnereinheit (5, 8) anhand der Information (I) selbsttätig ermittelt.

5. Rechnersystem nach Anspruch 1, **dadurch gekennzeichnet, daß** ein wahlfreier Schreibzugriff der zweiten Rechnereinheit (8) auf die Speichereinheit (RAM) der ersten Rechnereinheit (5) verhindert ist.

6. Rechnersystem nach einem der voranstehenden Ansprüche, **dadurch gekennzeichnet, daß** die erste Rechnereinheit (5) die Funktion der zweiten Rechnereinheit (8) überwacht und im Falle einer Störung der zweiten Rechnereinheit (8) ein Signal (R) abgibt.

7. Rechnersystem nach einem der voranstehenden Ansprüche, **dadurch gekennzeichnet, daß** die Rechnereinheiten (5, 8) einander gegenseitig überwachen und im Fall eines Fehlers der jeweils anderen Rechnereinheit (5, 8) ein Signal abgeben.

8. Rechnersystem nach einem der Ansprüche 6 oder 7, **dadurch gekennzeichnet, daß** diejenige Rechnereinheit (5), welche einen Fehler der jeweils anderen Rechnereinheit (8) feststellt, dem eine bestimmte Fehlerklasse zugeordnet ist, ein Rücksetz- oder Neustart-Signal (8) an die fehlerhafte Rechnereinheit (5, 8) sendet.

9. Rechnersystem nach einem der voranstehenden Ansprüche, **dadurch gekennzeichnet, daß** die zweite Rechnereinheit (8) mit mindestens einer standardisierten Schnittstelle (11) zum Übermitteln von Daten an ein externes Gerät ausgestattet ist.

10. Rechnersystem nach einem der voranstehenden Ansprüche, **dadurch gekennzeichnet, daß** die an die erste oder die zweite Rechnereinheit (5, 8) gesendete Information (I) eine Überwachungseinrichtung (7) durchläuft, welche die Information (I) überprüft und nur solche Information (I) zu der jeweiligen Rechnereinheit (8) passieren läßt, deren Zulässigkeit sie festgestellt hat.

## Claims

1. Computer system for a motor vehicle
- having a first computer unit (5) which controls the operation of vehicle-specific devices, such as the lighting system, windscreen wipers, heating devices, air-conditioning system, radio, information systems, communication systems and telecommunication devices, as a function of control instructions from the motor-vehicle driver,
- having at least one second computer unit (8) which executes programs, such as text-processing programs and games programs, which are predefined by the motor-vehicle driver,
- having a common operator control unit (2) for inputting information (I), and
- having a common output unit (9) for outputting information (D),
- with the operator control unit (2) passing the respectively input information (I) to the first or second computer unit (5, 8) with a prespecification (V), and
- with the display unit (9) displaying the information (D) which is to be respectively output and is generated by the first or second computer unit (5, 8),
- each of the computer units (5, 8) having available a memory unit (RAM) which can be read from and written to, and write and read access by the first computer unit (5) to the memory unit (RAM) of the second computer unit (8) being enabled, and
- write access by the second computer unit (8) to the memory unit (RAM) of the first computer unit (5) being possible only when the first computer unit (5) allows it.

2. Computer system according to Claim 1, **characterized in that** the operator control unit (2) is connected to the first computer unit (5), and **in that** the first computer unit (5) forwards the input information (I) to the second computer unit (8) as a function of the prespecification (V).

3. Computer system according to either of the preceding claims, **characterized in that** the display unit (9) is connected to the first computer unit (5), and **in that** the first computer unit (5) forwards to the display unit (9) that information (D) from the second computer unit (8) which is to be displayed.

4. Computer system according to one of the preceding claims, **characterized in that** the operator control unit (2) automatically determines the prespecification (V) for forwarding the input information (I) to the first or second computer unit (5, 8) on the basis of the information (I).

5. Computer system according to Claim 1, **characterized in that** optional write access by the second computer unit (8) to the memory unit (RAM) of the first computer unit (5) is prevented.

6. Computer system according to one of the preceding claims, **characterized in that** the first computer unit (5) monitors operation of the second computer unit (8) and, if there is a malfunction in the second computer unit (8), emits a signal (R).

7. Computer system according to one of the preceding claims, **characterized in that** the computer units (5, 8) monitor each other and, if there is a fault in the other respective computer unit (5, 8), emit a signal.

8. Computer system according to either of Claims 6 or 7, **characterized in that that** computer unit (5) which establishes a fault, which has an associated fault class, in the other respective computer unit (8) sends a reset or restart signal (8) to the faulty computer unit (5, 8).

9. Computer system according to one of the preceding claims, **characterized in that** the second computer unit (8) is equipped with at least one standardized interface (11) for transferring data to an external device.

10. Computer system according to one of the preceding claims, **characterized in that** the information (I) sent to the first or the second computer unit (5, 8) passes through a monitoring device (7) which checks the information (I) and allows only that information (I) whose admissibility it has established to be passed to the respective computer unit (8).

## Revendications

1. Système d'ordinateur pour un véhicule,
- avec une première unité d'ordinateur (5) qui commande, en fonction d'ordres de commande du conducteur du véhicule, les fonctions de dispositifs spécifiques au véhicule, comme l'éclairage, les essuie-glaces, les appareils de chauffage, l'installation de climatisation, la radio, les systèmes d'information, les systèmes de communication, les appareils de télécommunication,
- avec au moins une deuxième unité d'ordinateur (8) qui exécute des programmes prédéfinis par le conducteur du véhicule, tels que des programmes de traitement de texte, des programmes de jeu,
- avec une unité de commande commune (2) pour la saisie d'informations (I) et
- avec une unité de sortie commune (9) pour fournir des informations (D),
- l'unité de commande (2) transmettant les informations respectives saisies (I) avec une condition prédéfinie (V) à la première ou à la deuxième unité d'ordinateur (5, 8), et
- l'unité d'affichage (9) indiquant les informations (D) à fournir respectivement, produites par la première ou la deuxième unité d'ordinateur (5, 8),
- chacune des unités d'ordinateur (5, 8) disposant d'une unité de mémoire (RAM) avec possibilité d'écriture et de lecture et un accès d'écriture et de lecture de la première unité d'ordinateur (5) à l'unité de mémoire (RAM) de la deuxième unité d'ordinateur (8) étant possible, et
- un accès d'écriture de la deuxième unité d'ordinateur (8) à l'unité de mémoire (RAM) de la première unité d'ordinateur (5) étant seulement possible lorsque la première unité d'ordinateur (5) l'autorise.

2. Système d'ordinateur selon la revendication 1, **caractérisé en ce que** l'unité de commande (2) est connectée à la première unité d'ordinateur (5) et **en ce que** la première unité d'ordinateur (5) transfère les informations saisies (I) en fonction de la condition prédéfinie (V) à la deuxième unité d'ordinateur (8).

3. Système d'ordinateur selon l'une quelconque des revendications précédentes, **caractérisé en ce que** l'unité d'affichage (9) est connectée à la première unité d'ordinateur (5) et **en ce que** la première unité d'ordinateur (5) transfère les informations (D) à afficher de la deuxième unité d'ordinateur (8) à l'unité d'affichage (9).

4. Système d'ordinateur selon l'une quelconque des revendications précédentes, **caractérisé en ce que** l'unité de commande (2) détecte automatiquement la condition prédéfinie (V) pour le transfert des informations saisies. (I) à la première ou à la deuxième unité d'ordinateur (5, 8) à l'aide des informations (I).

5. Système d'ordinateur selon la revendication 1, **caractérisé en ce qu'**un accès d'écriture optionnel de la deuxième unité d'ordinateur (8) à l'unité de mémoire (RAM) de la première unité d'ordinateur (5) est empêché.

6. Système d'ordinateur selon l'une quelconque des revendications précédentes, **caractérisé en ce que** la première unité d'ordinateur (5) surveille le fonctionnement de la deuxième unité d'ordinateur (8) et dans le cas d'un mauvais fonctionnement de la deuxième unité d'ordinateur (8) émet un signal (R).

7. Système d'ordinateur selon l'une quelconque des revendications précédentes, **caractérisé en ce que** les unités d'ordinateur (5, 8) se surveillent mutuellement et dans le cas d'une erreur de l'autre unité d'ordinateur respective (5, 8), émettent un signal.

8. Système d'ordinateur selon l'une quelconque des revendications 6 ou 7, **caractérisé en ce que** l'unité d'ordinateur (5) qui établit une erreur de l'autre unité d'ordinateur (8), à laquelle est associée une classe d'erreur déterminée, envoie un message de réinitialisation ou de remise à zéro (8) à l'unité d'ordinateur (5, 8) présentant l'erreur.

9. Système d'ordinateur selon l'une quelconque des revendications précédentes, **caractérisé en ce que** la deuxième unité d'ordinateur (8) est munie d'au moins une interface standardisée (11) pour transmettre des données à un appareil externe.

10. Système d'ordinateur selon l'une quelconque des revendications précédentes, **caractérisé en ce que** les informations (I) envoyées à la première ou à la deuxième unité d'ordinateur (5, 8) passent par un dispositif de surveillance (7) qui vérifie les informations (I) et ne laisse passer à l'unité d'ordinateur respective (8) que les informations (I) dont il a constaté l'admissibilité.
